# EUROPEAN PATENT SPECIFICATION

(11) **EP 0 358 135 B1**
(45) Date of publication and mention of the grant of the patent: **31.01.1996**
(21) Application number: 89116231.5
(22) Date of filing: 02.09.1989
(51) Int. Cl.: C08L 81/02, C08J 5/18, D01F 6/66

(54) **Polyarylene sulfide resin composition**
Polyarylensulfid-Harzzusammensetzung
Composition de sulfure de polyarylène

(30) Priority: 07.09.1988 JP 222563/88; 28.12.1988 JP 329373/88
(43) Date of publication of application: 14.03.1990
(73) Proprietor: IDEMITSU KOSAN COMPANY LIMITED, Tokyo 100 (JP)
(72) Inventor: Murai, Hideya, Sodegaura-machi Kimitsu-gun Chiba-ken (JP); Yamao, Shinobu, Sodegaura-machi Kimitsu-gun Chiba-ken (JP)
(74) Representative: Türk, Gille, Hrabal, Leifert

(56) References cited:
- EP-A- 224 097
- EP-A- 0 291 915
- EP-A- 0 293 108
- US-A- 4 497 928
- WPIL, FILE SUPPLIER, AN=76-54877X, Derwent Publications Ltd, London, GB; & JP-A-53 013 469

## Description

### BACKGROUND OF THE INVENTION

The present invention relates to a polyarylene sulfide resin composition improved in moldability without substantially reducing physical properties such as strength and thermal resistance. The polyarylene sulfide resin composition of the present invention can be effectively utilized as a material for production of various molding such as mechanical or electrical parts.

The present invention further relates to a polyarylene sulfide-based oriented formed article produced by stretching the molding of the above polyarylene sulfide resin composition and more particularly to a polyarylene sulfide-based oriented formed article excellent in moldability, stretchability, thermal resistance, dimensional stability under heat and so forth, which can be effectively utilized as a material for production of heat resistant films, fibers, containers and so forth.

A polyarylene sulfide resin (hereinafter sometimes abbreviated to "PAS") is excellent in strength, thermal resistance, chemical resistance, electrical properties, mechanical properties, dimensional stability, and so forth and thus is used as an engineering plastic. This resin, however, cannot be heated to more than a certain temperature in molding because it is decomposed at an elevated temperature, causing problems such as coloration. For this reason, in injection molding of the resin, it is molded at an elevated molding pressure. Injection molding at such elevated pressures, however, causes problems such as molding flash (burr). This is more important in the case of a substantially straight-chain PAS resin having a high molecular weight and excellent in mechanical strength and so forth, which has been extensively developed in recent years.

An attempt to improve moldability of the PAS resin by incorporating the usual polystyrene has been made (Japanese Patent Publication No. 13469/1978). In accordance with this invention, although molding temperature can be lowered, a serious reduction in strength and thermal resistance is accompanied, and thus no one can make the best use of characteristics of the PAS resin.

Accordingly it has been desired to improve moldability of the PAS resin without reducing excellent characteristics such as strength and thermal resistance of the PAS resin, particularly in a filler compounded composition which is liable to be poor in moldability.

In recent years, with development of a PAS resin having a relatively high molecular weight, its application has been extended to oriented formings such as containers as well as films and fibers.

For example, a film obtained by biaxially stretching the PAS has been proposed. This biaxially stretched film has a diadvantage of being poor in dimensional stability and undergoing shrinking at a high temperature, although it is excellent in mechanical strength and is free from unevenness in thickness and mechanical characteristics.

In order to overcome the above problems, various additional operations are necessary; for example, the time for heat treatment of the stretched film is increased, heat treatment is applied at multi-stages, and heat treatment is applied under relaxed conditions.

### SUMMARY OF THE INVENTION

An object of the present invention is to provide a PAS resin composition improved in moldability without substantially reducing physical properties such as thermal resistance, impact resistance, strength and stiffness characteristic of a PAS resin.

Another object of the present invention is to provide a oriented formed article excellent in strength and dimensional stability under heat,and further in moldability, stretchability and so forth.

As a result of investigations to overcome the problems of the prior art, it has been found that a resin composition which is almost not reduced in physical properties such as strength and thermal resistance and is good in moldability can be obtained by adding a small amount of polystyrene having a specified structure including syndiotactic configuration to a PAS resin. Based on the findings, the first invention has been completed.

As a result of further investigations to provide a PAS resin molding having excellent strength and dimensional stability under heat, on the basis of the first invention that a polyarylene sulfide resin composition containing a specified proportion of a styrene-based polymer with mainly syndiotactic configuration is substantially free from a reduction in physical properties such as strength and heat resistance, and further is excellent in film molding properties and moldability, it has been found that an oriented formed article obtained by stretching the molding of the polyarylene sulfide resin composition is excellent in strength and thermal dimensional stability even though it is subjected to heat treatment under mild conditions, and further is excellent in film forming properties and stretchability and provides an oriented molding by stretching. Based on the findings, the second invention has been accomplished.

The first invention provides a polyarylene sulfide resin composition containing 0.01 - 28% by weight of a styrene-based polymer having mainly syndiotactic configuration, and a polyarylene sulfide resin composition comprising 100 parts by weight of the above composition and 1 to 500 parts by weight of a filler.

The second invention provides an oriented formed article produced by stretching the molding of a polyarylene sulfide resin composition containing 0.01 - 28% by weight of a styrene-based polymer having mainly syndiotactic configuration.

### BRIEF DESCRIPTION OF THE DRAWINGS

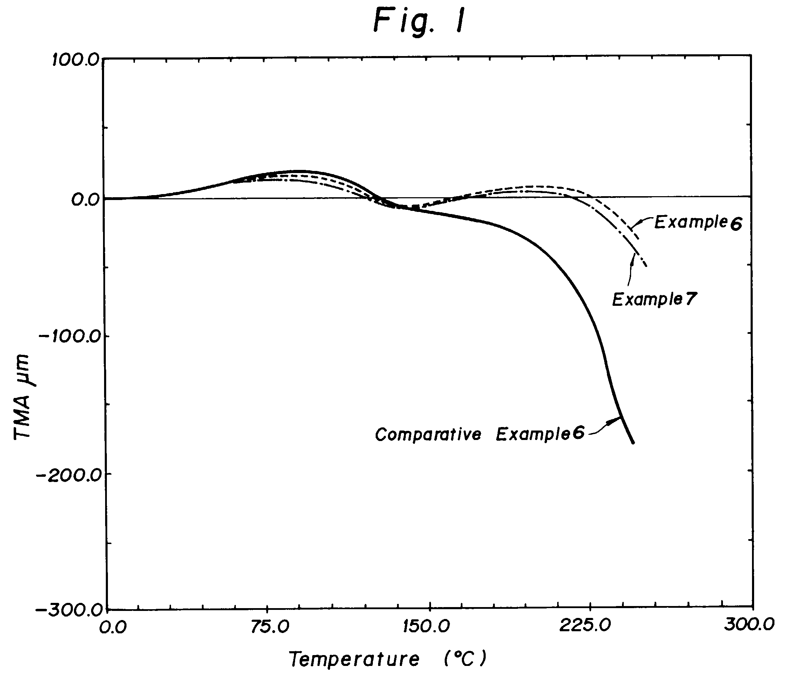

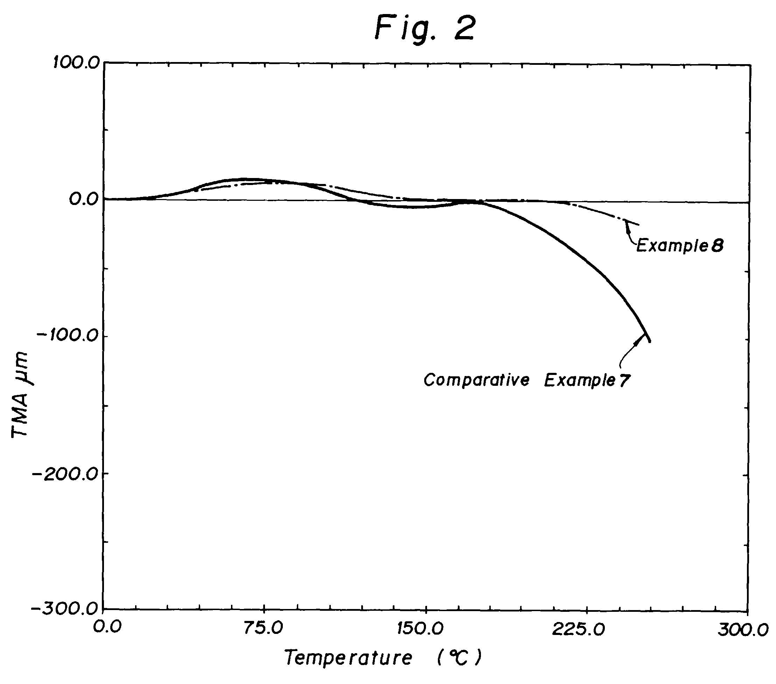

Figs. 1 and 2 demonstrate the results of measurement of thermal shrinking properties in Example and Comparative Example, respectively.

### DETAILED DESCRIPTION OF THE PREFERRED EMBODIMENTS

In the present invention, a polyarylene sulfide resin (PAS resin) is used as a main component.

An example of the PAS resin is polyphenylene sulfide having a repeating unit represented by the formula:

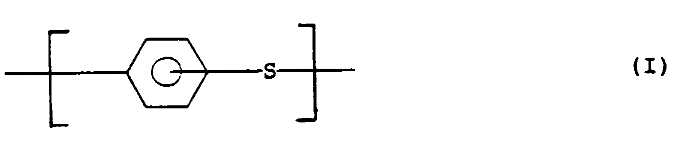

As the polyphenylene sulfide, as well as polyphenylene sulfide, a copolymer containing not more than 30 mol% and preferably not more than 20 mol% of a metaphenylene group or an ortho-phenylene group, for example, can be used. As the copolymer, a block copolymer is preferred.

In addition, polyphenylene sulfides containing one or more of the repeating units represented by the following formulae: 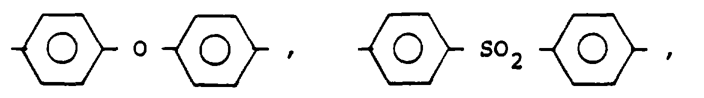 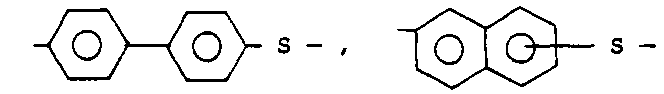 and 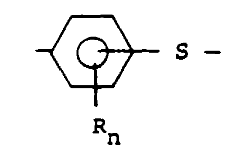 (wherein R is an alkyl group containing 1 to 6 carbon atoms, and n is a nubmer of 1 to 4) can be used.

In the above formulae, each aromatic ring may have one or more substituent of lower alkyl group and/or halogen atom.

The inherent viscosity ηᵢₙₕ as determined at 206°C using a solution of 0.4 g of a solute in 100 ml of an α-chloronaphthalene solvent of polyarylene sulfide to be used in the present invention is 0.05 to 1.00 dl/g and preferably 0.1 to 0.8 dl/g.

When the composition is used in injection molding, the inherent viscosity ηᵢₙₕ is preferably 0.1 to 0.8 dl/g, and in production of an oriented formed article, it is preferably 0.15 to 1.00 dl/g. If the inherent viscosity ηᵢₙₕ is less 0.15 dl/g, film molding properties and spinning properties are not sufficiently satisfactory and film stretching becomes difficult.

The PAS resin may be substantially straight (lenear), or may be branched or cross-linked by the use of a branching agent or by application of heat, or may be a mixture thereof. Particularly in production of an oriented formed article, a PAS resin which is substantially straight is preferred.

As a component to be compounded to the above PAS resin in the present invention, a styrene-based polymer having mainly syndiotactic configuration (hereinafter sometimes abbreviated to a "SPS polymer") is used ; such polymers are prepared in EP-A-2 240 097.

The styrene-based polymer having mainly syndiotactic configuration means a polymer having configuration that with respect to a main chain comprising a carbon-carbon bond, phenyl groups or substituted phenyl groups as side chains are positioned alternately in the opposite directions. The tacticity is determined by the nuclear magnetic resonance method using a carbon isotope (the ¹³C-NMR method).

The tacticity as determined by the ¹³C-NMR method can be indicated in terms of the proportions of a plurality of continuous constitutional units, for example, diad when two constitutional units are continuously linked to each other, triad when three constitutional units are continuously linked to each other, or pentad when five constitutional units are continuously linked to each other.

The styrene-based polymer having mainly syndiotactic configuration to be used in the present invention includes polystyrene, poly(alkylstyrene), poly(halogenated styrene), poly(alkoxystyrene), poly(vinyl benzoate) and their mixtures, and copolymers containing the above monomer as the main component, each usually having a syndiotacticity that the proportion of diad is at least 75% and preferably at least 85%, or the proportion of pentad (racemic pentad) is at least 30% and preferably at least 50%.

Typical examples of the poly(alkylstyrene) are polymethylstyrene, polyethylstyrene, polyisopropylstyrene, poly-tert-butylstyrene and the like. Typical examples of the poly(halogenated styrene) are polychlorostyrene, polybromostyrene, polyfluorostyrene and the like. Typical examples of the poly(alkoxystyrene) are polymethoxystyrene, polyethoxystyrene and the like. Particularly preferred examples of the styrene-based polymers are polystyrene, poly-p-methylstyrene, poly-m-methylstyrene, poly-p-tert-butylstyrene, poly-p-chlorostyrene, poly-m-chlorostyrene, poly-p-fluorostyrene, and a copolymer of styrene and p-methylstyrene.

The SPS polymer to be used in the present invention varies in molecular weight. The weight average molecular weight of the SPS polymer is preferably at least 10,000 and particularly preferably from 50,000 to 1,000,000. If the weight average molecular weight is less than 10,000, the SPS polymer is not sufficiently high in heat resistance and mechanical strength, and the resulting composition is not sufficiently improved in heat resistance and mechanical strength.

The SPS polymer to be used in the present invention is not critical in a distribution of molecular weight, and those having various distributions of molecular weight can be used.

The SPS polymer has a melting point of 160 to 310°C and thus is much superior in heat resistance to the conventional styrene-based polymers having the atactic configuration.

In the present invention, the SPS polymer having a melting point of 220 to 300°C is preferred.

The SPS polymer can be prepared, for example, by polymerizing a styrene-based monomer (corresponding to the above SPS polymers) by the use of a catalyst comprising a titanium compound and a condensate of trialkylaluminum and water in the presence or absence of an inert hydrocarbon solvent (see Japanese Patent Application Laid-Open No. 187708/1987).

The SPS polymer to be used in the present invention is not always limited to the aforementioned polymers. For example, syndiotactic polystyrene described in Japanese Patent Application Laid-Open No. 268711/1988 can be used. This syndiotactic polystyrene has a repeating unit represented by the formula: 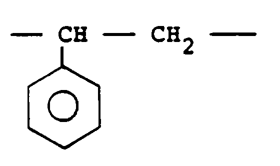 a number average molecular weight as determined by gel permeation chromatogram (GPC) (in 1,2,4-trichlorobenzene at 130°C) of 4x10⁴ to 4x10⁶, and melting points, as determined by the use of a differential scanning calorimeter, falling within the ranges of 240 to 250°C and 260 to 270°C.

The polyarylene sulfide resin composition of the first invention basically comprises the -aforementioned PAS resin and SPS polymer, and containing 0.01 to 28% by weight and preferably 0.1 to 28% by weight of the above SPS polymer. If the SPS polymer content is 30% by weight or more, the heat distortion temperature is decreased and fire retardance, for example, is reduced. If the SPS polymer content is too small, particularly less than 1% by weight, fluidity, and reduction in molding flash in injection molding are improved only insufficiently. Even if it is less than 1% by weight, crystallinity and stiffness are expected to be increased.

The polyarylene sulfide-based resin composition to be used in the second invention is also basically composed of the aforementioned PAS resin and SPS polymer, and contains the SPS polymer in a proportion of 0.5 to 28% by weight. If the SPS polymer content is 30% by weight or more, thermal resistance, fire retardance, film molding properties and so forth are reduced. Accordingly, in the polyarylene sulfide resin composition of the second invention, the PAS resin is in a continuous phase. If the SPS polymer content is too small, particularly less than 0.5% by weight, film molding properties, stretchability, thermal processing properties and so forth are improved only insufficiently.

In the polyarylene sulfide resin composition of the first invention, a filler can be compounded.

The filler may be fibrous or powdery. Fibrous fillers are fibers of materials such as glass, asbestos, silica, silica-alumina, silicon nitride, silicon carbide, potassium titanate, metal, polyamide, polyimide, and carbon. Of these glass fibers and carbon fibers are preferred. The form of glass fiber includes a bundle cut form, a short fiber form and a filament form, and it is preferred for the glass fiber to be of the bundle cut form and to have a length of 0.05 to 13 mm and a fiber diameter of 5 to 15 µm. Glass fiber treated with a silane or titanate-based coupling agent is particularly preferred. As the carbon fiber, carbon fiber of the chopped fiber type or milled fiber type is preferred, and carbon fiber having a length of 0.05 to 20 mm and a diameter of 3 to 15 µm is good.

Powdery fillers include powders of silica, talc, clay, mica, glass, zeolite, bentonite, montmorillonite, carbon black, titanium oxide, silicon carbide, calcium carbonate, calcium sulfate, barium carbonate, magnesium carbonate, magnesium sulfate, barium sulfate, oxy sulfate, tin oxide, alumina, kaolin, metal and so forth.

In the first invention, of the aforementioned fillers, an inorganic filler, particularly a fibrous inorganic filler, such as glass fiber or a combination of fibers such as glass fiber and a powdery filler is preferably used.

The above filler is used in a proportion of 1 to 500 parts by weight, preferably 5 to 300 parts by weight per 100 parts by weight of the polyarylene sulfide resin composition containing 0.01 - 28% by weight of the SPS polymer. If the proportion of the filler compounded is less than 1 part by weight, an effect of improving stiffness and so forth by compounding the filler cannot be expected. On the other hand, if the proportion of the filler compounded is more than 500 parts by weight, uniform dispersion and moldability are not satisfactory, and no additional effect cannot be expected.

The polyarylene sulfide resin composition of the first invention comprises the aforementioned PAS resin and SPS polymer, or further a filler compounded thereto. If necessary, various additives such as a nucleating agent, an antioxidant, a plasticizer, a compatible agent, a lubricant, a colorant, and an antistatic agent can be added. In particular, nucleating agent, an antioxidant and a plasticizer are desirably added.

In the polyarylene sulfide-based resin composition to be used in the second invention, various additives as described above can be added, if necessary.

Various antioxidants can be used. Of these, a phosphorus-containing antioxidant and a phenol-based antioxidant are preferably used.

The composition of the first invention can be prepared by kneading the aforementioned components by the usual method using a kneader, a mixing roll, an extruder or a mixer, for example, or by the solution blending, for example.

The composition thus obtained is molded into various moldings by injection molding or extrusion molding, for example.

The polyarylene sulfide-based resin composition to be used in the second invention can be prepared by dry blending the aforementioned components by the use of a blender or a mixer, or solution blending or melt blending using an extruder, for example.

The oriented formed article of the second invention is obtained by stretching the molding of the above polyarylene sulfide-based resin composition. More specifically, mono or bi-axially stretched films, fibers, and thermoformed or blow molded containers are obtained.

Mono or bi-axially stretched films can be obtained by pelletizing the polyarylene sulfide-based resin composition by melt kneading, extruding the resulting pellets by the use of an extruder (T die) in such a manner that the PAS resin is as in an amorphous state as possible, and stretching the unstretched original sheet obtained above. The PAS resin can be maintained as in an amorphous state as possible by quenching at the time of molding.

It is undesirable that the degree of crystallization of the unstretched original sheet is high, because the sheet is readily subjected to break-down at the stretching.

The above unstretched original sheet is heat stretched to produce a stretched film. Heat stretching may be monoaxial stretching or biaxial stretching. In the case of biaxial stretching, the sheet may be stretched in longitudinal and lateral directions at the same time, or stretched successively in any desired order.

In stretching of the unstretched original sheet, it usually suffices that the sheet is monoaxially or biaxially stretched at 70 to 120°C, preferably 75 to 110°C in the range of the glass transition temperature of the PAS resin to a temperature 30°C higher than the glass transition temperature of the PAS resin. If the stretching temperature is lower than the glass transition temperature of the PAS resin, cutting occurs. On the other hand, if it is higher than the temperature 30°C higher than the glass transition temperature of the PAS resin, an effect of orientation by stretching cannot be expected.

The stretch ratio is such that the area ratio is at least 3 times, preferably at least 7 times in both monoaxial stretching and biaxial stretching. If the stretch ratio is too small, mechanical strength is poor and an unevenness in thickness and mechanical characteristics is undesirably increased. On the other hand, if the stretch ratio is too large, cutting is liable to occur at the time of stretching.

A monoaxially or biaxially stretched film which is one of the oriented formed articles of the second invention is obtained by further subjecting the above stretched film to heat fixation (heat treatment).

In the second invention, even if heat fixation is carried out under mild conditions, an oriented formed article having good physical properties and dimensional stability at high temperatures can be obtained.

That is, heat fixation is sufficient to be carried out usually at a temperature within the range Of 200°C to the melting point for 1 to 600 seconds, preferably 2 to 180 seconds. In the present invention, even if heat treatment under relaxed conditions is not applied, a film having sufficiently satisfactory dimensional stability can be obtained, and a heat treating apparatus can be simplified.

In this manner, a monoaxially or biaxially stretched film which is one of the oriented formed articles of the present invention can be obtained.

As the original film and stretched film, in place of a flat film by the above T die method, a film obtained by the tubular method can be employed. In this case, heat fixation is applied to a tubular film or a flat film obtained by cutting the tube.

In the case of fiber (fibrous formed article), as in the above stretched film, the polyarylene sulfide-based resin-composition is melt kneaded, pelletized, spun and then stretched.

In spinning, quenching is preferably applied so that the PAS resin is as in an amorphous state as possible. Spinning is sufficient to be carried out by melting polyarylene sulfide-based resin composition pellets at a temperature higher than the melting temperature, preferably from the melting point to the decomposition temperature and extruding the resulting molten composition through a fine nozzle.

Stretching of the fiber above spun followed by heat fixation provides the fibrous formed article which is one of the oriented formed articles of the second invention.

Stretching can be carried out by controlling the. speed of a wind-up roll and the speed of a delivery roll. This stretching is carried out within the range of the glass transition temperature of the PAS resin to a temperature 30°C higher than the glass transition temperature of the PAS resin. If the stretching temperature is lower than the glass transition temperature of the PAS resin, cutting of the stretched fiber occurs. On the other hand, if it is higher than the temperature 30°C higher than glass transition temperature of the PAS resin, an effect of stretching cannot be expected.

The stretch ratio is 3 to 20 times, preferably 5 to 10 times. If the stretch ratio is too small, mechanical strength is poor, and an unevenness in string diameter and mechanical characteristics is undesirably increased. On the other hand, if the stretch ratio is too large, cutting readily occurs at the time of stretching.

Heat fixation is sufficient to be carried out under mild conditions similar to those in heat fixation of the monoaxially or biaxially stretched film.

In this manner, a fiber (fibrous formed article) which is one of the oriented formed articles of the second invention can be obtained.

In the case of a thermoformed container, it can be obtained by thermoforming the unstretched original sheet used in production of the monoaxially or biaxially stretched film and then subjecting the resulting formed article to heat fixation. This thermoforming can be carried out by known techniques such as vacuum forming or pressure forming.

In the case of a blow molded container, the polyarylene sulfide-based resin composition is extruded into a cylindrical tube (parison) by the use of an extruder, blowing air into the tube to produce a blow molded formed article and then subjecting the formed article to heat fixation. As the blow molding, injection blow molding can be applied.

In connection with heat fixation for production of the thermoformed container and the blow molded container, it is sufficient to be carried out under mild conditions similar to those in production of the monoaxially or biaxially stretched film.

In this manner, a thermoformed or blow molded container which is one of the oriented formed article of the second invention can be obtained.

In the polyarylene sulfide resin composition of the first invention, moldability is improved with almost no reduction in heat resistance, impact resistance, strength and stiffness characteristic of the polyarylene sulfide resin. In this composition, it is unnecessary to increase the molding temperature, decomposition of the resin can be prohibited, coloration due to resin decomposition does not occur, and injection molding pressure can be decreased and thus formation of molding flash can be decreased. Thus the composition is suitable as a material for injection molding of various moldings such as mechanical or electrical moldings.

In particular, the present invention is suitable for a composition using a PAS resin which is substantially straight, has a relatively high molecular weight, has a high strength, and is of high whiteness.

The oriented formed article of the second invention is excellent in dimensional stability under heat. That is, the oriented formed article of the second invention is excellent in heat resistance and also is almost free from changes in dimensions up to 220°C.

The oriented formed article of the second invention is high in shear speed dependency of melt viscosity and is excellent in moldability.

The oriented formed article of the second invention is rarely subject to stretch cutting and is excellent in stretching properties.

The oriented formed article of the second invention, even if heat treated under mild conditions, is excellent in the above performance and thus is high in productivity.

Accordingly, the oriented formed article of the second invention is useful as a heat resistant film, fiber or container, for example.

The present invention is described in greater detail with reference to the following examples.

### EXAMPLES 1 TO 4, AND COMPARATIVE EXAMPLES 1 TO 4

Ingredients shown in Table 1 were compounded in a predetermined formulation, and then melted, kneaded and extruded by the use of an extruder to produce pellets. These pellets were injection molded at a molding temperature of 320°C to produce a molding (127 mm x 12.7 mm x 3.2 mm). The minimum charging pressure at the time of molding, the molding flash length, and various physical properties were measured, and the results are shown in Table 1.

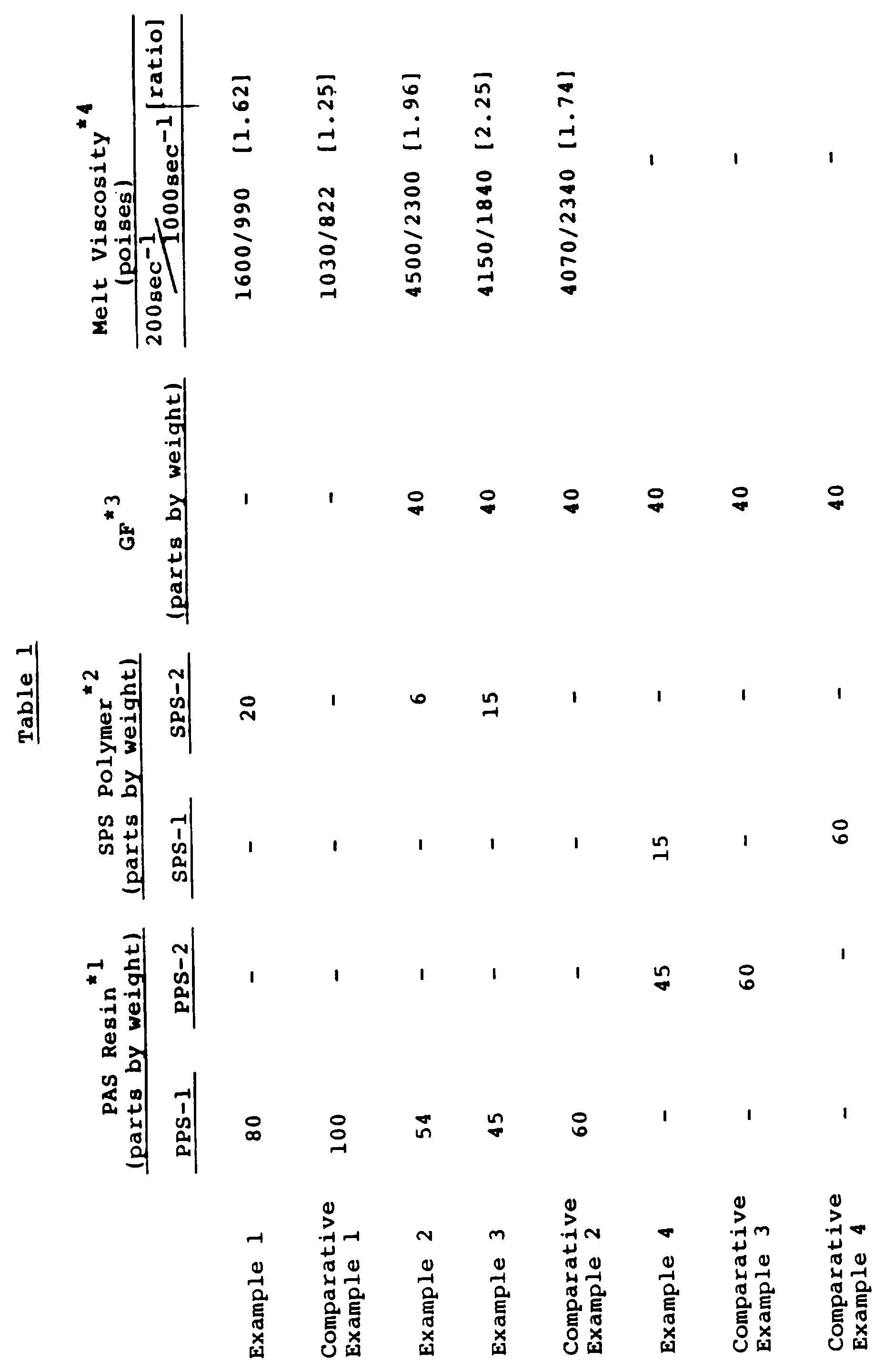

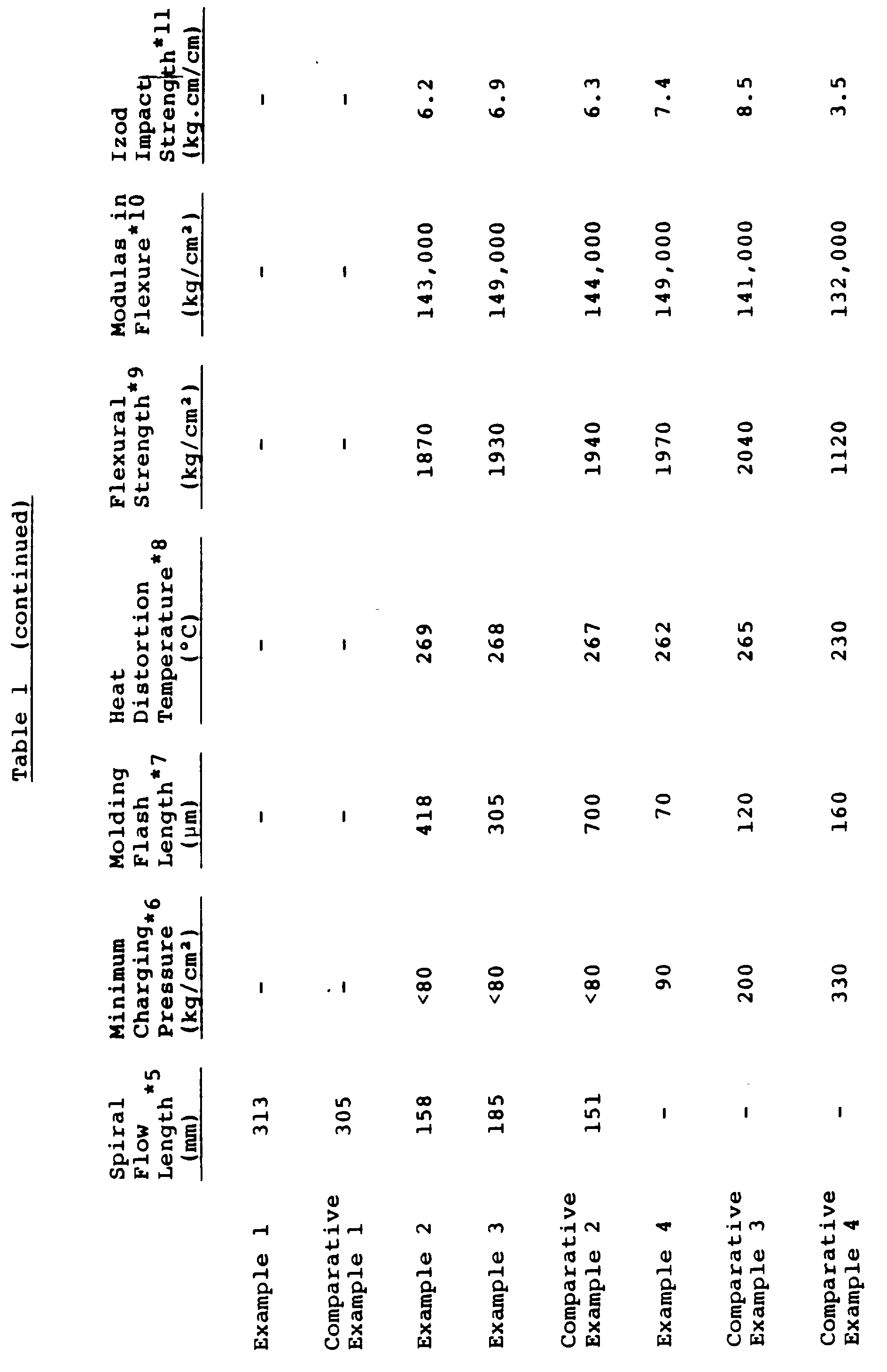

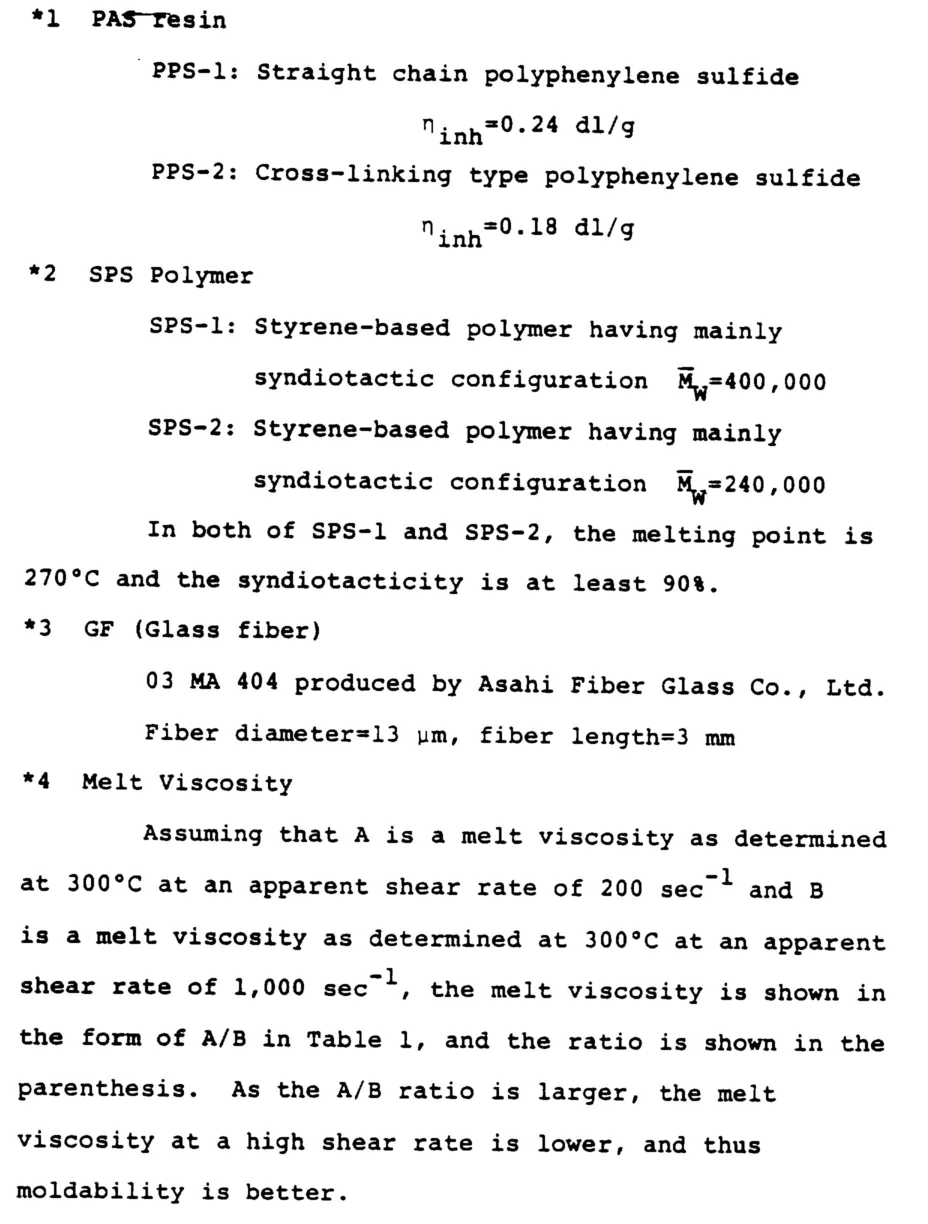

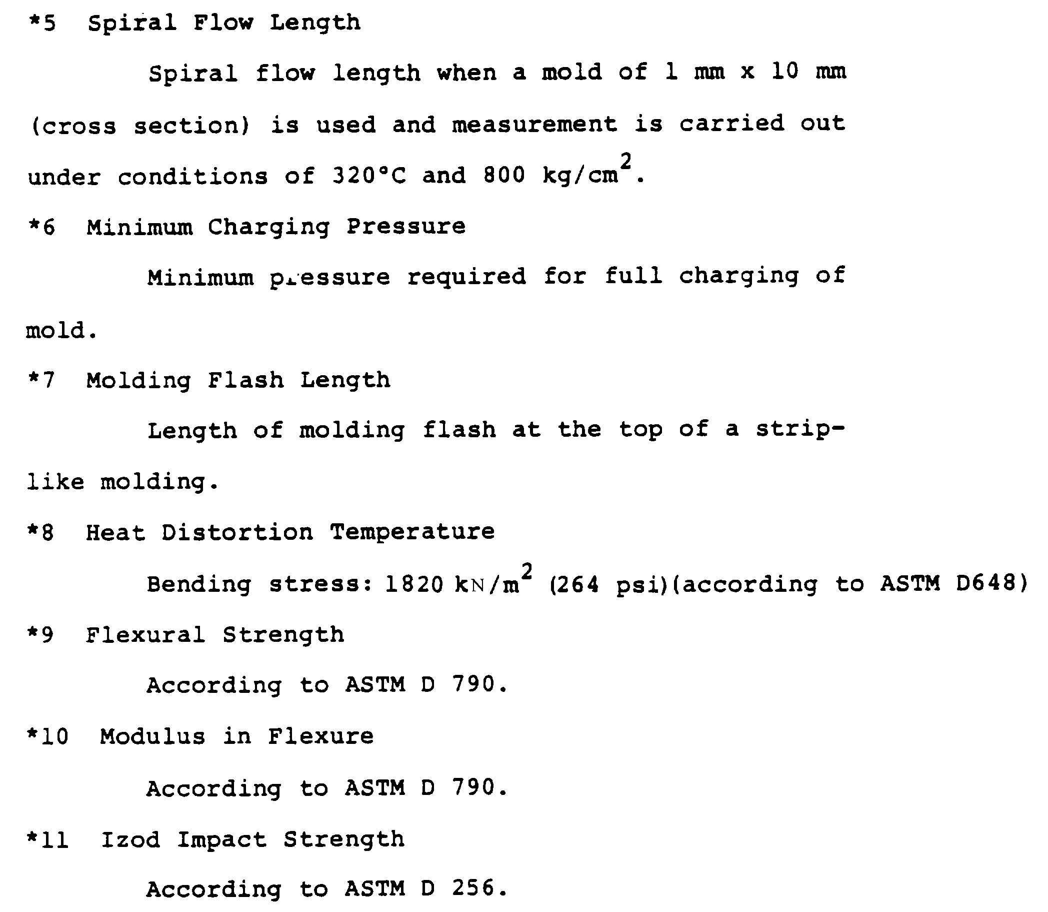

### EXAMPLE 5 AND COMPARATIVE EXAMPLE 5

Ingredients shown in Table 2 were compounded in a predetermined formulation, pelletized by the use of a 20 mm φ extruder at a resin temperature of 305°C in a discharging amount of 1 kg/hr, and dried and crystallized at 140°C for 3 hours. The pellets thus obtained were extruded at a temperature by the use of a 35 mm φ extruder with a 200 mm T die to obtain an unstretched original sheet.

The sheet thus obtained was stretched at a stretching temperature of 98°C, a stretching speed of 3x10³ %/min and a stretch ratio of 3.5 times (in longitudinal direction) x 3.5 times (in lateral direction), and then heat fixed at 260°C for 30 seconds to obtain a biaxially stretched film. This film was measured for mechanical characteristics and evaluated for film molding properties and uniform stretching properties. The results are shown in Table 2.

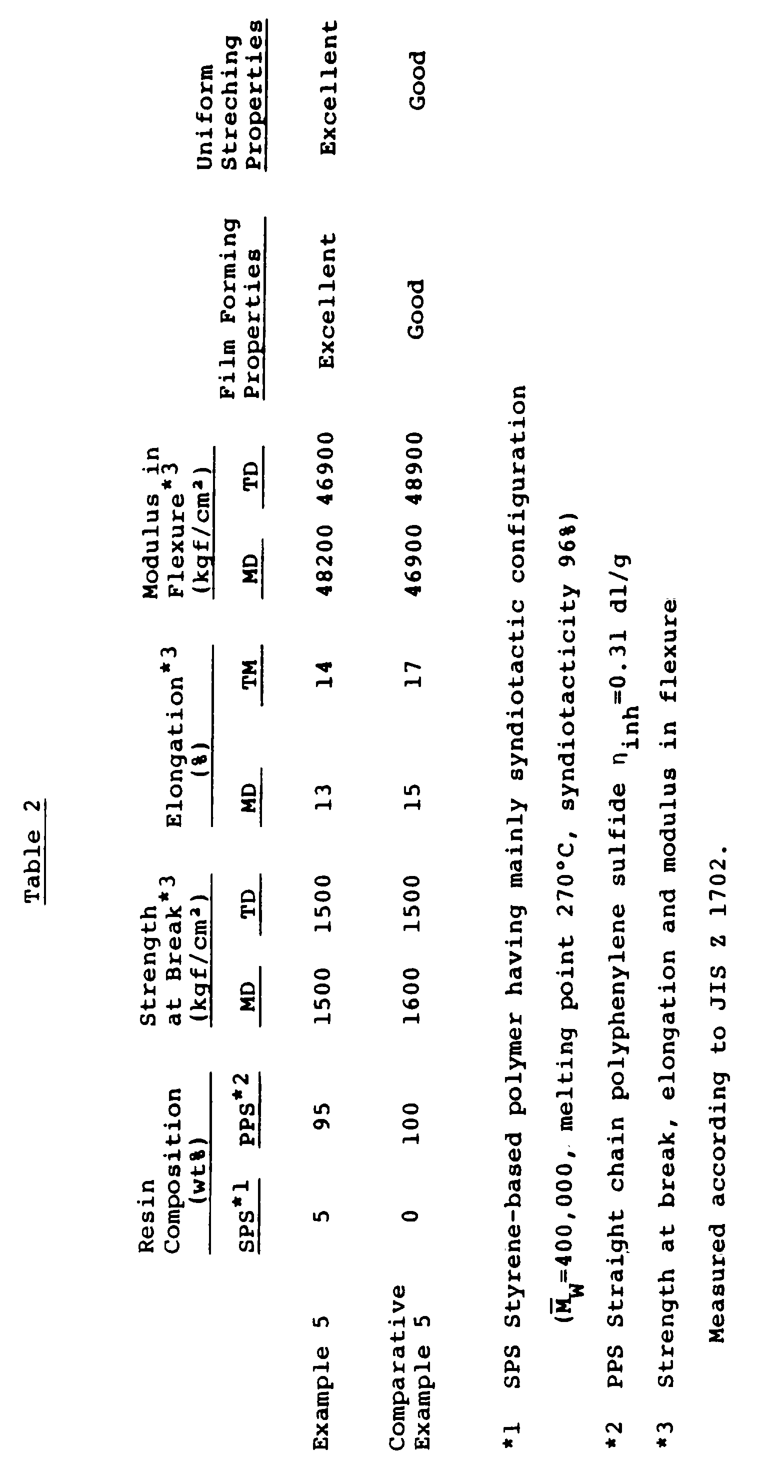

### EXAMPLE 6

A biaxially stretched film was obtained in the same manner as in Example 5 except that heat fixation was carried out at 260°C for 60 seconds.

This film was measured for heat shrinkability under conditions of initial stress 250 g/mm, temperature raising speed 2°C/min, and sample length 10 mm. The results are shown in Fig. 1.

### COMPARATIVE EXAMPLE 6

A biaxially stretched film was obtained in the same manner as in Comparative Example 5 except that heat fixation was carried out at 260°C for 60 seconds.

This film was measured for heat shrinkability in the same manner as in Example 6. The results are shown in Fig. 1.

### EXAMPLE 7

A biaxially stretched film was obtained in the same manner as in Example 6 except that the proportion of SPS compounded was changed to 20% by weight. This film was measured for heat shrinkability in the same manner as in Example 6, and the results are shown in Fig. 1.

### EXAMPLE 8, AND COMPARATIVE EXAMPLE 7

Ingredients shown in Table 3 were compounded in a predetermined formulation, pelletized at a resin temperature and a discharging amount of 1 kg/hr by the use of a 20 mm φ extruder, and then dried and crystallized at 140°C for 3 hours. These pellets were spun by the use of a 20 mm φ extruder under conditions of discharging amount 200 g/hr and pulling speed 3 m/sec and at the same time, quenched using water maintained at 0°C.

The string thus obtained was stretched at a stretching temperature of 98°C and a stretch ratio of 7.5 times, and then heat fixed at 260°C for 60 seconds.

The string thus obtained was measured for heat shrinkability in the same manner as in Example 6. The results are shown in Fig. 2.

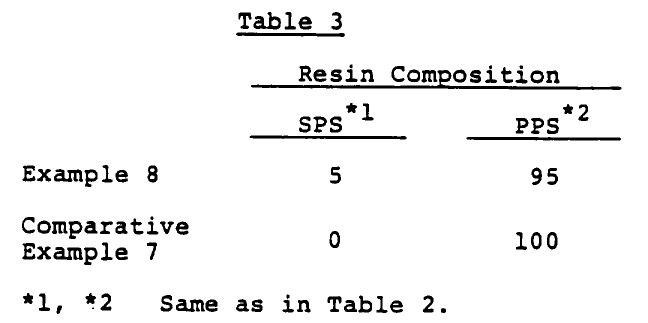

It can be seen from Tables 1 and 2 that the oriented formed article of the second invention is good in dimensional stability to high temperatures.

### EXAMPLE 9

The unstretched sheet (thickenss: 170 µm) obtained in Example 5 was heated to 98°C and then vacuum thermoformed to obtain a circular container having an opening diameter of 120 mm, a bottom diameter of 100 mm and a height of 25 mm. This circular container was set on a mold and heat treated at 180°C for 60 seconds to obtain an oriented container.

In this oriented container, no distortion was observed even at 220°C.

## Claims

1. A polyarylene sulfide resin composition containing 0,01 to 28 % by weight of a styrene-based polymer having mainly syndiotactic configuration.

2. The composition as claimed in Claim 1 wherein the polyarylene sulfide resin is polyphenylene sulfide.

3. The composition as claimed in Claim 2 wherein the polyphenylene sulfide has a inherent viscosity ηᵢₙₕ (as determined using a solution of 0.4 g of a solute in 100 ml of an α-chloronaphthalene solvent at 206°C) of at least 0.05 dl/g.

4. The composition as claimed in any of Claims 1 to 3 wherein the styrene-based polymer having mainly syndiotactic configuration has a weight average molecular weight of from 50 000 to 1 000 000.

5. The composition as claimed in any of claims 1 to 4 wherein the proportion of the styrene-based polymer having mainly syndiotactic configuration is 1 to 28 % by weight.

6. The composition as claimed in any of claims 1 to 5 wherein a filler is further compounded in an amount of from 1 to 500 parts by weight per 100 parts by weight of the composition.

7. The composition as claimed in Claim 6 wherein the filler is a fibrous inorganic filler.

8. The composition as claimed in Claim 6 or 7 wherein a filler is further compounded in an amount of from 5 to 300 parts by weight per 100 parts by weight of the composition.

9. An oriented formed article comprising a polyarylene sulfide-based resin composition containing 0.5 to 28 % by weight of a styrene-based polymer having mainly syndiotactic configuration.

10. The oriented article as claimed in Claim 9 wherein the polyarylene sulfide resin is polyphenylene sulfide.

11. The oriented article as claimed in Claim 10 wherein the polyphenylene sulfide has a inherent viscosity ηᵢₙₕ (as determined using a solution of 0.4 g of a solute in 100 ml of an α-chloronaphthalene solvent at 206°C) of 0.15 to 1.00 dl/g.

12. The oriented article as claimed in any of Claims 9 to 11 wherein the styrene-based polymer having mainly syndiotactic configuration has a weight average molecular weight of from 50 000 to 1 000 000.

13. The oriented article as claimed in any of Claims 9 to 12 which is a monoaxially or biaxially stretched film.

14. The oriented article as claimed in any of Claims 9 to 12 which is a fiber.

15. The oriented article as claimed in any of Claims 9 to 12 which is a thermoformed or blow molded container.

## Patentansprüche

1. Eine Polyarylensulfid-Harzzusammensetzung, enthaltend 0,01 bis 28 Gew.-% eines Polymeren auf Styrolbasis mit in wesentlichen syndiotaktischer Konfiguration.

2. Die Zusammensetzung wie in Anspruch 1 beansprucht, wobei das Polyarylensulfid-Harz Polyphenylensulfid ist.

3. Die Zusammensetzung wie in Anspruch 2 beansprucht, wobei das Polyphenylensulfid eine inhärente Viskosität ηᵢₙₕ (bestimmt unter Verwendung einer Lösung von 0,4 g eines Soluts in 100 ml eines α-Chlornaphthalinlösunqsmittels bei 206°C) von mindestens 0,05 dl/g aufweist.

4. Die Zusammensetzung wie in einem der Ansprüche 1 bis 3 beansprucht, wobei das Polymer auf Styrolbasis mit im wesentlichen syndiotaktischer Konfiguration ein gewichtsmittleres Molekulargewicht von 50.000 bis, 1.000.000 aufweist.

5. Die Zusammensetzung wie in einem der Ansprüche 1 bis 4 beansprucht, wobei der Anteil an Polymer auf Styrolbasis mit im wesentlichen syndiotaktischer Konfiguration 1 bis 28 Gew.-% beträgt.

6. Die Zusammensetzung wie in einem der Ansprüche 1 bis 5 beansprucht, wobei ein Füllstoff darüber hinaus in einer Menge von 1 bis 500 Gewichtsteilen pro 100 Gewichtsteile der Zusammensetzung compoundiert wird.

7. Die Zusammensetzung wie in Anspruch 6 beansprucht, wobei der Füllstoff ein faseriger anorganischer Füllstoff ist.

8. Die Zusammensetzung wie in Anspruch 6 oder 7 beansprucht, wobei ein Füllstoff darüber hinaus in einer Menge von 5 bis 300 Gewichtsteilen pro 100 Gewichtsteile der Zusammensetzung compoundiert wird.

9. Ein orientiertes Formteil, umfassend eine Harzzusammensetzung auf Polyarylensulfid-Basis, enthaltend 0,5 bis 28 Gew.-% eines Polymeren auf Styrolbasis mit im wesentlichen syndiotaktischer Konfiguration.

10. Das orientierte Formteil wie in Anspruch 9 beansprucht, wobei das Polyarylensulfid-Harz Polyphenylensulfid ist.

11. Das orientierte Formteil wie in Anspruch 10 beansprucht, wobei das Polyphenylensulfid eine inhärente Viskosität η inh (bestimmt unter Verwendung einer Lösung von 0,04 g eines Soluts in 100 ml eines α-Chlornaphthalin-Lösungsmittels bei 206°C) von 0,15 bis 1,00 dl/g aufweist.

12. Das orientierte Formteil wie in einem der Ansprüche 9 bis 11 beansprucht, wobei das Polymer auf Styrolbasis mit im wesentlichen syndiotaktischer Konfiguration ein - gewichtsmittleres Molekulargewicht von 50.000 bis 1.000.000 aufweist.

13. Das orientierte Formteil wie in einem der Ansprüche 9 bis 12 beansprucht, das ein monoaxial oder biaxial gestreckter Film ist.

14. Das orientierte Formteil wie in einem der Ansprüche 9 bis 12 beansprucht, das eine Faser ist.

15. Das orientierte Formteil wie in einem der Ansprüche 9 bis 12 beansprucht, das ein thermogeformter oder blasgeformter Behälter ist.

## Revendications

1. Composition de résine de polysulfure d'arylène contenant de 0,01 à 28 % en poids d'un polymère dérivé de styrène ayant une configuration principalement syndiotactique.

2. Composition selon la revendication 1, dans laquelle la résine de polysulfure d'arylène est un polysulfure de phénylène.

3. Composition selon la revendication 2, dans laquelle le polysulfure de phénylène a une viscosité inhérente ηᵢₙₕ (déterminée en utilisant une solution de 0,4 g d'un soluté dans 100 ml de solvant α-chloronaphtalène à 206 °C), d'au moins 0,05 dl/g.

4. Composition selon l'une quelconque des revendications 1 à 3, dans laquelle le polymère dérivé de styrène ayant une configuration principalement syndiotactique, a un poids moléculaire moyen en poids de 50 000 à 1 000 000.

5. Composition selon l'une quelconque des revendications 1 à 4, dans laquelle la proportion du polymère dérivé de styrène ayant principalement une configuration syndiotactique, est de 1 à 28 % en poids.

6. Composition selon l'une quelconque des revendications 1 à 5, dans laquelle on mélange en outre une charge selon une quantité de 1 à 500 parties en poids pour 100 parties en poids de. la composition.

7. Composition selon la revendication 6, dans laquelle la charge est une charge inorganique fibreuse.

8. Composition selon la revendication 6 ou 7, dans laquelle on mélange en outre une charge selon une quantité de 5 à 300 parties en poids pour 100 parties en poids de la composition.

9. Article façonné et orienté comprenant une composition de résine à base de polysulfure d'arylène contenant de 0,5 à 28 % en poids d'un polymère dérivé de styrène ayant une configuration principalement syndiotactique.

10. Article orienté selon la revendication 9, dans lequel la résine de polysulfure d'arylène est un polysulfure de phénylène.

11. Article orienté selon la revendication 10, dans lequel le polysulfure de phénylène a une viscosité inhérente ηᵢₙₕ (déterminée en employant une solution de 0,4 g d'un soluté dans 100 ml de solvant α-chloronaphtalène à 206 °C), de 0,15 à 1,00 dl/g.

12. Article orienté selon l'une quelconque des revendications 9 à 11, dans lequel le polymère dérivé de styrène ayant une configuration principalement syndiotactique, a un poids moléculaire moyen en poids de 50 000 à 1 000 000.

13. Article orienté selon l'une quelconque des revendications 9 à 12, consistant en un film étiré monoaxialement ou biaxialement.

14. Article orienté selon l'une quelconque des revendications 9 à 12, consistant en une fibre.

15. Article orienté selon l'une quelconque des revendications 9 à 12, consistant en un récipient thermoformé ou moulé par soufflage.
